# EUROPÄISCHE PATENTSCHRIFT

(11) **EP 1 904 405 B1**
(45) Veröffentlichungstag und Bekanntmachung des Hinweises auf die Patenterteilung: **30.09.2009**
(21) Anmeldenummer: 05752416.7
(22) Anmeldetag: 24.06.2005
(51) Int. Cl.: C01G 49/06, C09C 1/24

(54) **LAMELLARES EISEN-III-OXID**
LAMELLAR IRON-III-OXID
OXYDE FERRIQUE LAMELLAIRE

(30) Priorität: 24.06.2004 AT 10772004; 24.06.2005 AT 4132005 U
(43) Veröffentlichungstag der Anmeldung: 02.04.2008
(73) Patentinhaber: Kärntner Montanindustrie Gesellschaft m.b.H., 9400 Wolfsberg (AT)
(72) Erfinder: HENCKEL VON DONNERSMARCK, Andreas, 9400 Wolfsberg (AT); BÖHME, Berndt, 9400 Wolfsberg (AT)
(74) Vertreter: Sonn & Partner Patentanwälte
(86) Internationale Anmeldenummer: PCT/AT2005/000231
(87) Internationale Veröffentlichungsnummer: WO 2006/000009

(56) Entgegenhaltungen:
- EP-A- 0 544 949
- WO-A-95/11281
- DE-A1- 3 624 920

## Beschreibung

Die Erfindung betrifft Eisen-III-Oxid, das eine lamellare Struktur von mindestens 50 Gew.-%, vorzugsweise 75 Gew.-% aufweist.

Die Erfindung betrifft weiters ein Verfahren zur Herstellung von lamellaren Eisen-III-Oxid.

Des Weiteren betrifft die Erfindung die Verwendung von lamellaren Eisen-III-Oxid.

Eisen-III-Oxid ist typischerweise als rote bis schwarze Kristalle ausgebildet. Die paramagnetische Modifikation wird mineralogisch auch als Hämatit bezeichnet. Hämatit kann feinschuppige, tafelige, plättchenförmige aber auch gedrungene Kristalle bzw. Körner oder Partikel zeigen. Aufgrund der feinschuppigen, tafeligen, plättchenförmigen Ausbildung ist Eisen-III-Oxid im Handel unter dem Namen Eisen-Glimmer (Fe-Glimmer) bekannt.

Im Vorliegenden wird unter lamellarer Struktur die feinschuppige, tafelige, plättchenförmige Struktur des Eisen-III-Oxids verstanden.

Eisen-III-Oxid wird in vielen Anwendungsbereichen eingesetzt, in denen diese Struktur von Nutzen ist. Dies gilt insbesondere für Überzüge, Anstriche, Beschichtungen unterschiedlichster Art, wobei das Eisen-III-Oxid häufig als Pigment mit einem entsprechenden Bindemittel versetzt wird und auf einen Untergrund, wie beispielsweise Stahlkonstruktionen im Außenbereich, aufgetragen wird. Durch das Vorhandensein der lamellaren Eisen-III-Oxid-Partikel entwickelt der Überzug eine Barrierewirkung, einen Schildeffekt, eine erhöhte Abriebbeständigkeit und einen verstärkten Farbfilm. Als Barrierewirkung und Schildeffekt wird üblicherweise die Widerstandsfähigkeit von Überzügen verstanden. Sie wird im Allgemeinen dadurch erreicht, dass sich die Eisen-III-Oxid-Plättchen beim Auftragen des Überzugs auf den Untergrund im Wesentlichen parallel zur Oberfläche des Untergrunds orientieren und teilweise einander überlappen. Dadurch wird der Weg des "Permeants" verlängert und das Durchdringen von z.B. korrosiv wirkenden Stoffen ("Permeant") wird somit verzögert (Barrierewirkung). Gleichfalls wird eine rasche Schädigung des Untergrundes, aber auch des Bindemittels, durch weitere Umwelteinflüsse, wie UV-, IR-Einstrahlung - wobei die Strahlung von/an den Plättchen abgelenkt bzw. reflektiert wird -, Temperaturschwankungen, vermieden (Schildeffekt).

Ein zusätzlicher positiver Effekt besteht in der erhöhten Belastbarkeit gegenüber mechanischer Beanspruchung. Durch Verdunsten der Lösungsmittel des Überzugs, das Feuchtwerden und Trocknen sowie durch mechanische Beanspruchung wird ein herkömmlicher Überzug in kurzer Zeit in Mitleidenschaft gezogen und beschädigt werden. Durch die Verstärkung mittels lamellaren Eisen-III-Oxids im Überzug wird diesen Beanspruchungen entgegengewirkt.

Bislang stellte sich jedoch das Problem, dass natürliches Eisen-III-Oxid lediglich in bis zu 60 oder 50 µm Partikelgröße unter Beibehaltung der lamellaren Struktur bereitgestellt werden konnte. Die Partikelgröße konnte allenfalls bis zu 30 µm herabgesetzt werden, da nur Partikel größer 30 µm unbeschädigte Lamellen zeigten. Daher konnten bislang die vorstehend genannten Vorteile des lamellaren Eisen-III-Oxids nur im Falle von Partikelgrößen größer 30 µm genutzt werden. Ein Siebrückstand kleiner 30 µm von Eisen-III-Oxid kann zwar in geringen Mengen bedingt weiter verwendet werden, gilt allerdings als Ausschuss. Insbesondere erweist sich Eisen-III-Oxid von kleinerer Partikelgröße in Überzügen als nicht sinnvoll, da es bislang als Gemisch von Körnern mit einem sehr geringen Anteil an Partikeln mit lamellarer Struktur vorlag und die der lamellaren Struktur zuzuordnenden positiven Eigenschaften nicht zur Geltung kamen.

Aus einem vorveröffentlichten Datenblatt der Anmelderin zu natürlichen Fe-Glimmern mit der Bezeichnung "MIOX MICRO-Serie" werden Produkte (MICRO 30, MICRO 40, MICRO 50) vorwiegend zur Verwendung in Überzügen beschrieben, die einen Siebrückstand von 2% bei 32 µm, bei 40 µm und bei 50 µm mit einem lamellaren Anteil von 90 % der untersuchten Proben ergeben haben. Die Kornsummenkurve - die graphische Darstellung der Korngrößenverteilung - zur Probe mit dem kleinsten Oberkorn (MICRO 30) zeigt, dass ein sehr geringer Anteil der Körner dieser Probe im Feinbereich liegen.

Ähnliche Eisenoxid-Produkte sind aus der JP 2 194 072 A sowie der JP 61 031 318 A bekannt.

Auch aus der DE 36 24 920 A1 ist ein lamellares Hämatit-Naturprodukt bekannt, das aus einem Verfahren zur Gewinnung von lamellarem Eisenoxid aus natürlichem Hämatit gewonnen wird. Dabei wird der Hämatit auf einen Korngrößenbereich von 0 bis 8 cm vorgebrochen, getrocknet und auf 0 bis 60 bzw. 120 µm, vorzugsweise 90 µm, gemahlen. Die Anteile kleiner 3 µm werden allerdings abdekantiert und als Ausschuss verworfen. Weiters enthält das erhaltene Hämatitprodukt Verunreinigungen von etwa 0,2 Gew.-%.

Dem natürlichen Fe-Glimmer werden im Stand der Technik allerdings weitere Nachteile nachgesagt, insbesondere auf dem Anwendungsgebiet der Beschichtungen. Beispielsweise werden in den wissenschaftlichen Artikeln im Namen von MPLC Laboratories Ltd., Peterlee, U.K. "Production of synthetic lamellar iron oxide for use as a pigment in protective coatings", verfasst von E.V. Carter and R.D. Laundon, und "Synthetic lamellar iron oxide: a new pigment for anticorrosive primers", verfasst von E. Carter, von einem ungewollt hohen Anteil an granularen Körnern und morphologisch unregelmäßig ausgebildeten Körnern des natürlichen Fe-Glimmers und von unerwünschten Verunreinigungen in einer Probe, d.h. Begleitminerale, wie z.B. Schwefel-hältige Minerale, wie Pyrit, Silikate, Karbonate, gesprochen, die die Korrosionsbeständigkeit, Adhesionskraft mit dem verwendeten Binder, Dauerhaftigkeit und damit Zuverlässigkeit von Beschichtungen negativ beeinflussen.

Es wurde daher vorgeschlagen, synthetisches Eisen-III-Oxid bereitzustellen, das die genannten Nachteile des natürlichen Fe-Glimmers hintanhalten soll. Zumeist sind es herkömmliche chemische Methoden, die zur Herstellung von synthetischem Plättchen-Fe-Glimmer herangezogen werden, wie sie beispielsweise auch in den vorgenannten wissenschaftlichen Artikeln erläutert sind.

Die JP 2 024 364 A beschreibt die Herstellung eines magnetischen Eisen-Oxid-Pigments aus Eisen-Oxid-Partikeln mit einem Durchmesser von 5 bis 200 µm und einer Dicke von etwa 0,2 bis 5 µm, die in spezieller Formulierung unter reduzierten Gasbedingungen reduziert und anschließend zu magnetischem Eisen-Oxid aufoxidiert werden.

Aus der EP 0 544 949 A1 ist eine Zusammensetzung für Beschichtungen bekannt, die neben anderen Bestandteilen, wie insbesondere Pigmente, auch plättchenförmige künstlich hergestellte Eisenoxid-Partikel enthält. Die Eisen-III-Partikel werden in einem Autoklaven mit einer Eisen-III-Hydroxid-Oxid-Partikel enthaltenden Alkalisuspension synthetisiert. Die erhaltenen Eisenoxid-Partikeln sind Monokörner, also von nur einer Korngröße. Es werden mehrere Korngrößen von jeweils 4 bis 25 µm hergestellt, wobei eine Beschichtung nur eine dieser Korngrößen enthält. Die hergestellten Eisenoxid-Partikel zeigen weiters eine Dicke von 0,16 bis 5 µm und ein Aspektverhältnis (Verhältnis des Durchmessers zur Dicke eines Korns) von 5:1 bis 25:1. Die Menge der Eisenoxid-Partikel in einer Zusammensetzung für die Beschichtung beträgt 0,005 bis 50 Gewichtsanteile der Beschichtung.

Die WO 95/11281 A1 beschreibt ein Beschichtungsmittel für Schiffscontainer (Überseecontainer). Auch hier wird ein rein synthetisches Eisen-III-Oxid eingesetzt, um den Einsatz von Lösungsmitteln, wie Xylol oder Toluol, zu reduzieren.

Synthetische Fe-Glimmer sind zumeist nachteilig, da die Verfahren zu ihrer Herstellung kostenintensiv aufwendig und einseitig sind. Ohne verfahrenstechnische Umstellungen oder Umrüstungen der Einrichtungen können nur Monokörner, d.h. Fe-Glimmer-Plättchen, in im Wesentlichen gleicher oder ähnlicher Korngröße bereitgestellt werden.

Es ist nun Aufgabe der Erfindung, Eisen-III-Oxid in lamellarer Struktur einem breiten Anwendungsbereich kostengünstig zugänglich zu machen, wobei der Gehalt an lamellaren Partikeln in breiteren aber auch in feineren Korngrößenbereichen bereitgestellt werden soll.

Diese Aufgabe wird erfindungsgemäß dadurch gelöst, dass das Eisen-III-Oxid ein mechanisch aufbereitetes Eisen-III-Oxid natürlichen Ursprungs ist und zumindest 50 Gew.-%, vorzugsweise zumindest 70 Gew.-%, besonders bevorzugt 90 Gew.-%, des Eisen-III-Oxids in einer Partikelgröße von kleiner als 10 µm vorliegen.

Mechanisch aufbereitetes Eisen-III-Oxid kann gemäß der Erfindung mikronisiert, d.h. gemahlen, sein. Bevorzugterweise wird die mechanische Aufbereitung mit Hilfe der nachstehend genannten Verfahren durchgeführt.

Eisen-III-Oxid natürlichen Ursprungs bedeutet gemäß der Erfindung, dass die Eisen-Partikel natürlichen Vorkommens, allen voran natürlichen Lagerstätten, entnommen sind.

Ein Endprodukt mit einem erhöhten Anteil an lamellaren Eisen-III-Oxid in einer Partikelgröße von kleiner als 10 µm gewinnt an Qualität und Einsetzbarkeit. Dies gilt nicht nur für Industriezweige, in denen Dünnfilmbeschichtungen von Bedeutung sind, sondern generell für die Anwendung in Überzügen oder Beschichtungen. Aufgrund der feinen Korngröße und der Korngrößenverteilung der Plättchen kann sich eine Einregelung und Überlappung der Plättchen während des Auftrags der Beschichtung auf einen zu beschichtenden Untergrund auf einfache Weise und rasch einstellen. Die Einregelung der einzelnen unterschiedlich großen Plättchen, im Wesentlichen parallel zur Oberfläche des Untergrunds, wird nur erschwert durch ein "querliegendes" "aufgerichtetes", d.h. nicht in der gewünschten Orientierung ausgerichtetes Korn, behindert. Die ungewünschte Ausrichtung dieses Korns kann durch Einregelung eines anderen, benachbartem Plättchens automatisch "korrigiert" werden. Darüber hinaus, ist gerade bei der im Wesentlichen parallelen, aber gegenseitig überlappenden Anordnung der Eisen-III-Oxid-Partikel aufgrund ungleich großer Plättchen nahezu keine Wegigkeit für ungewollt eindringende und schädlich wirkende Stoffe gegeben, was hinsichtlich der Barriere- und Schildwirkung der Beschichtung von Bedeutung ist. Ebenso ergibt sich durch die Einregelung der Plättchen eine höhere Packungsdichte, was auch hinsichtlich der Dichtheit der Beschichtung von Vorteil ist.

Die Korngrößenverteilung ist im Endprodukt erkennbar und auf einfache Weise messbar, beispielsweise anhand der Mikroskopie. Es liegen im Wesentlichen keine Monokörner vor, d.h. Partikel, die im Wesentlichen gleicher oder ähnlicher Korngröße sind, sondern es zeigen sich vielmehr Partikel, die ungleich groß sind, wodurch im Endprodukt unterschiedlich große Körner verteilt und/oder überlappend vorliegen. Die Kornverteilung des natürlichen Eisen-III-Oxids kann beispielsweise auch anhand einer Kornsummenkurve betrachtet werden, wobei der d₁₀-, der d₅₀- und/oder der d₉₈-Wert (arithmetische Werte, die in der Praxis gängigerweise zur Beurteilung eines solchen Produktes herangezogen werden) typischerweise unterschiedlich ist (in einem ungleichen Verhältnis zueinander stehen), wohingegen im Wesentlichen gleiche Werte Monokörnern zuzusprechen sind und daher einem synthetischen Eisen-III-Oxid entspricht. Natürliche, mechanisch aufbereitete Fe-Glimmer-Plättchen zeigen auch eine markante Bruchcharakteristik, die von ihrer natürlichen Mineralstruktur herrührt und leicht erkennbar ist. Typisch für natürliche Eisen-III-Oxide ist des Weiteren das Vorhandensein von Verwachsungen mit Phasen anderer Mineralogie und/oder das Vorliegen von Begleitmineralien. Beispielsweise finden sich Verwachsungen mit Silikaten, Karbonaten, etc., die auch als einzelne Körner vorliegen können (Begleitminerale). In manchen Proben des natürlichen, erfindungsgemäßen Eisen-III-Oxids kann es vorkommen, dass der Anteil der Begleitminerale im Bereich von bis zu 10 oder gar 15 % liegt. Je nach Anwendungsgebiet kann der Anteil der Begleitminerale reduziert werden, d.h. Entfernung zumindest des größten Anteils der Begleitminerale, oder aber auch beibehalten werden.

Das Einhalten der gewünschten maximalen Partikelgröße und die für das Endprodukt optimale Partikelgrößenverteilung kann auf herkömmliche Art z.B. anhand einer Sieblinie kontrolliert werden. Es liegt in der Natur der Sache, dass die Partikelgrößen auch in den Submikronbereich fallen können. Das Eisen-III-Oxid kann je nach Anwendungsbereich in beliebigen Partikelbändern zur Verfügung gestellt werden. So können beispielsweise Bereiche von 1 µm bis 3 µm, 5 µm bis 10 µm oder andere Bereiche - auch Bereiche feinerer Korngrößen - bevorzugt sein. Selbstverständlich können auch Partikelbänder im Submikronbereich zur Verfügung gestellt werden.

Es kann angestrebt werden, dass ein Endprodukt etwa 90 Gew.-% an lamellaren Eisen-III-Oxid kleiner 10 µm enthält. Beispielsweise kann dies in Überzügen, wie in Lacken oder ähnlichen Anstrichen, besonders von Vorteil sein, da die Barrierewirkung, die Schildwirkung und die Abriebbeständigkeit weiters verbessert werden kann. Auch die Widerstandsfähigkeit gegenüber mechanischer Beanspruchung, schwankenden Umgebungsverhältnissen, wie Temperatur, Feuchtigkeit, Trockenheit und dgl., kann deutlich gesteigert werden. Bei Einhaltung der Partikelgrößenverteilung kann eine hohe Packungsdichte der Eisen-III-Oxid-Partikel in beispielsweise Lacken erzielt werden, wodurch sich der Lack zusätzlich widerstandsfähiger gegenüber mechanischer Beanspruchung verhält.

Gemäß einem weiteren Merkmal der Erfindung kann das Eisen-III-Oxid auch in einer Partikelgröße von kleiner oder kleiner gleich 5 µm vorliegen. Es sei bemerkt, dass die maximale Korngröße des erfindungsgemäßen Eisen-III-Oxids je nach Anwendung und gewünschter Qualität des Endprodukts innerhalb der gemäß der Erfindung definierten Größen variieren kann.

Zur Angabe sowie auch zur Charakterisierung der lamellaren Struktur von Eisen-III-Oxid kann das Aspektverhältnis herangezogen werden. Darunter ist im Rahmen der Erfindung das Verhältnis des Größtdurchmessers zur Dicke oder Höhe eines Partikels (Lamelle) eines Eisen-III-Oxid-Korns zu verstehen. Zur Ermittlung des Aspektverhältnisses wird bevorzugterweise ein Eisen-III-Oxid-Partikel aus dem Größtkornbereich herangezogen. Gemäß der Erfindung ist ein Aspektverhältnis [Größtdurchmesser/Dicke] der Lamellen des Eisen-III-Oxids im Wesentlichen 20 : 1, vorzugsweise 5 : 1, hinsichtlich erhöhter Einsetzbarkeit besonders von Vorteil.

Bei einer Anwendung des erfindungsgemäßen Eisen-III-Oxids für Beschichtungen, insbesondere für Dünnschichtfilme, ist es demnach vorstellbar, dass ein Eisen-III-Oxid-Plättchen mit einer Schichtdicke, d.h. Plättchendicke von 2 µm, gewählt wird und für eine Beschichtung mit einer Schichtdicke von etwa 15 µm eingesetzt wird. Gemäß diesem Beispiel kann es sogar vorkommen, dass die Beschichtung bis zu 3 bis 5 oder sogar mehr Lagen Eisen-III-Oxid-Plättchen zeigt, wobei die Fe-Partikel in im Wesentlichen parallel zum Untergrund der Beschichtung orientierter Ausrichtung vorliegen.

Gemäß einem alternativen Merkmal im Rahmen der Erfindung kann dem Eisen-III-Oxid ein Eisen-III-Oxid synthetischen Ursprungs beigemengt sein. Geeigneterweise zeigt das synthetische Eisen-III-Oxid genannte lamellare Struktur; vorzugsweise auch in der erfindungsgemäßen maximalen Korngröße. Vorteilhafterweise weist es auch ein Aspektverhältnis, das jenem des erfindungsgemäßen natürlichen Eisen-III-Oxids gleich oder ähnlich ist, auf. Dadurch liegt ein Gemisch aus natürlichen und synthetischen Fe-Glimmer vor. Dies kann dann vorteilhaft sein, wenn es für eine spezielle Anwendung beispielsweise gewünscht ist, dass eine bestimmte Partikelgröße im Kornband dominant sein soll, und dies durch die Verwendung von Eisen-III-Oxid synthetischen Ursprungs einfacher erhaltbar ist. Dabei ist es zum Beispiel vorstellbar, dass ein solches Gemisch etwa bis zu 10 % oder gar etwa bis zu 15% synthetisches Eisen-III-Oxid aufweist.

Hinsichtlich der Bereitstellung des synthetischen Eisen-III-Oxids sind verschiedenste an sich bekannte Methoden - wie sie auch oben angedeutet sind - denkbar. Es kann auch die Thermolyse von Eisenverbindungen, z.B. ausgehend von Eisensulfat, oder oxidative Verfahren in wässrigen Medien, wie das Penniman-Zoph-Verfahren oder das Anilin-Verfahren, herangezogen werden, welche Methoden gängigerweise für die Herstellung von Eisen-III-Oxid als Pigment angewandt werden. Auch kann synthetisches Eisen-III-Oxid durch Auflösen von z.B. Eisenschrott in einer geeigneten Säure und anschließendem kontrollierten Fällen unter Druck und einer Schutzgas- (z.B. Stickstoff-)atmosphäre hergestellt werden.

Alternativ dazu kann das Eisen-III-Oxid durch Kristallzüchtung, typischerweise aus einer Eisenoxid-Lösung unter an sich bekannten Bedingungen, gewachsen sein. Die Eisen-III-Oxid-Kristalle sind dabei bis zur gewünschten, erfindungsgemäßen maximalen Partikelgröße gewachsen. Es ist sogar auch vorstellbar, die Kristalle zu größeren Kristallen heranzuzüchten, wonach sie auf die erfindungsgemäße Partikelgrößengrenze mechanisch heruntergebrochen werden. Bei der Kristallzüchtung sollte geeigneterweise - je nach Anwendung - auf die Bildung und Beibehaltung der lamellaren Struktur der Eisen-III-Oxid-Kristalle geachtet werden.

Die Aufgabe der Erfindung wird des Weiteren dadurch gelöst, dass ein Verfahren zur Herstellung des erfindungsgemäßen lamellaren Eisen-III-Oxids geschaffen wird, bei welchem das Eisen-III-Oxid in einer Prallmühle, wie mit Hilfe einer an sich bekannten Strahlmühle, auf die erfindungsgemäße Partikelgröße zerkleinert werden. In diesem Fall kann beispielsweise Dampfexpansion zur Beschleunigung der Eisen-III-Oxid-Teilchen in der Mühle eingesetzt werden.

Alternativ dazu ist es vorstellbar, dass das Eisen-III-Oxid einer scherenden Beanspruchung, wie mit Hilfe einer an sich bekannten Schermühle, unterzogen wird. Im Zuge einer solchen Aufbereitung werden die Eisen-III-Oxid-Partikel durch Reibung zerkleinert.

Es hat sich gezeigt, dass diese genannten Verfahren eine schonende, effektive und kostengünstige mechanische Aufbereitung der Eisen-III-Oxid-Partikel zur Erzielung der gewünschten Partikelgröße unter Beibehaltung der lamellaren Struktur der Körner darstellen. Überrasschenderweise hat sich dies insbesondere bei der Verwendung der Strahlmühle gezeigt.

Im Anschluss an die mechanische Aufbereitung ist es günstig, dass das Eisen-III-Oxid in Partikel-Fraktionen, -Bereiche oder -Bänder getrennt wird. In dieser Form kann das erfindungsgemäße Eisen-III-Oxid somit für seine Weiterverarbeitung bereitgestellt werden. Dabei können Sichtvorrichtungen, wie Windsichter, Zentrifugalkraftsichter und dgl. oder auch andere Fraktionierungs- bzw. Trennvorrichtungen zum Einsatz kommen.

Hinsichtlich einer Vewendung des erfindungsgemäßen Eisen-III-Oxids stehen zahlreiche Möglichkeiten offen. Es hat sich gezeigt, dass sich das erfindungsgemäße Eisen-III-Oxid in Überzügen, wie Lacke, zum Schutz von Untergründen gegen Korrosion genauso gut eignet, wie in Überzügen zum Schutz von Untergründen vor mechanischer Beanspruchung oder in Überzügen, welche den Untergrund vor Licht, d.h. UV-, IR-Licht, schützen sollen. Es konnte festgestellt werden, dass durch das erfindungsgemäße Eisen-III-Oxid die Haftung des Überzugs auf dem zu überziehenden Untergrund selbst in Zwischenschichten des Überzugs stark verbessert werden kann. Die Schutzeigenschaften generell, unabhängig von der Art des Bindemittels für das Eisen-III-Oxid, können wesentlich erhöht werden. Dadurch kann die Belastbarkeit und damit auch.die Lebensdauer des Überzugs verlängert werden. Als Untergründe können metallische oder nichtmetallische Flächen, Gegenstände und vieles mehr verstanden werden. Es hat sich gezeigt, dass sich das erfindungsgemäße Eisen-III-Oxid besonders effektiv als Pigment in Lacken, Farben und dgl., z.B. für Stahlkonstruktionen im Außenbereich, eignet.

Gleichfalls kann durch das erfindungsgemäße Eisen-III-Oxid der optische Effekt, z.B. der metallische Glanz, von Überzügen, d.h. Zierüberzügen, für Gegenstände, wie Boote, Surfbretter, Dekorgegenstände, elektrische Geräte und vieles mehr, erhalten und/oder auch verstärkt werden.

Das Einsatzgebiet des erfindungsgemäßen Eisen-III-Oxids ist jedoch nicht auf Überzüge beschränkt, sondern kann bis zum Einsatz als Füllmaterial in Kunststoffprodukten reichen. Als Kunststoffprodukte können beispielsweise Polyethylen, Polypropylen, Polyamid, Glasfaser-verstärkte Kunststoffe und andere Stoffe in Betracht kommen.

Darüber hinaus konnte überraschenderweise festgestellt werden, dass die Eigenschaften des erfindungsgemäßen Eisen-III-Oxids hinsichtlich Barrierewirkung, Schildwirkung, Schutz vor mechanischer Beanspruchung, optischer Effekt und dgl. besonders gut in Erzeugnissen der keramischen Industrie ausgenutzt werden können. So eignet sich das erfindungsgemäße Eisen-III-Oxid hervorragend als Zusatz, beispielsweise als Pigment, in keramischen Werkstoffen, die zum Beispiel für die Herstellung und/oder die Behandlung von Erzeugnissen für den Sanitärbereich, wie Fliesen, Waschbecken und dgl., insbesondere deren Oberflächen, herangezogen werden.

Über diese genannten Vewendungsmöglichkeiten hinaus bietet sich das erfindungsgemäße Eisen-III-Oxid für eine Vielzahl von weiteren Anwendungen an, in denen die lamellare Struktur von Eisen-III-Oxid im niedrigen Partikelgrößenbereich von Vorteil ist.

Die Erfindung wird im Folgenden anhand von in den Zeichnungen dargestellten Ausführungsbeispielen näher erläutert. Dabei zeigen:
Fig. 1 eine tabellarische Gegenüberstellung von Eisen-III-Oxid natürlichen und synthetischen Ursprungs;
Fig. 2 ein Bild einer Elektronenmikroskopaufnahme mit 5000-facher Vergrößerung einer Probe des erfindungsgemäßen Eisen-III-Oxids;
Fig. 3 ein Bild einer Elektronenmikroskopaufnahme mit 10000-facher Vergrößerung einer Probe des erfindungsgemäßen Eisen-III-Oxids; und

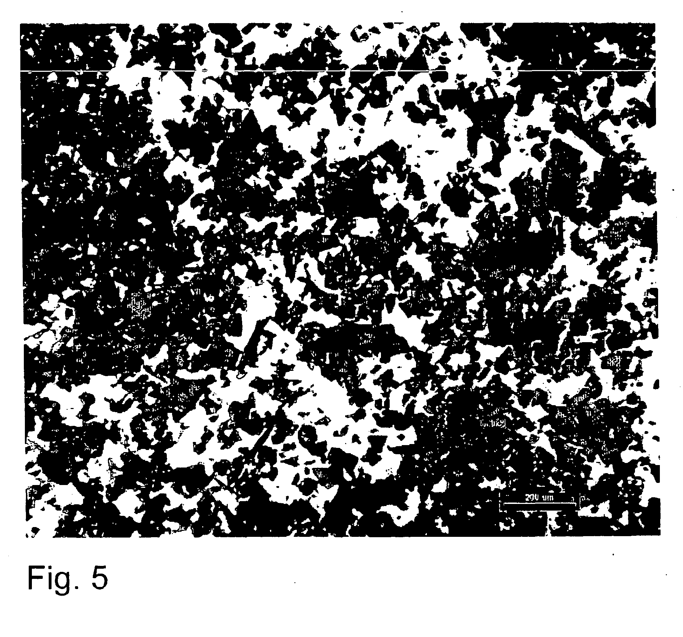

Fig. 4 bis Fig. 6 weitere Bilder von Elektronenmiskroskopaufnahmen einer Probe des erfindungsgemäßen Eisen-III-Oxids.

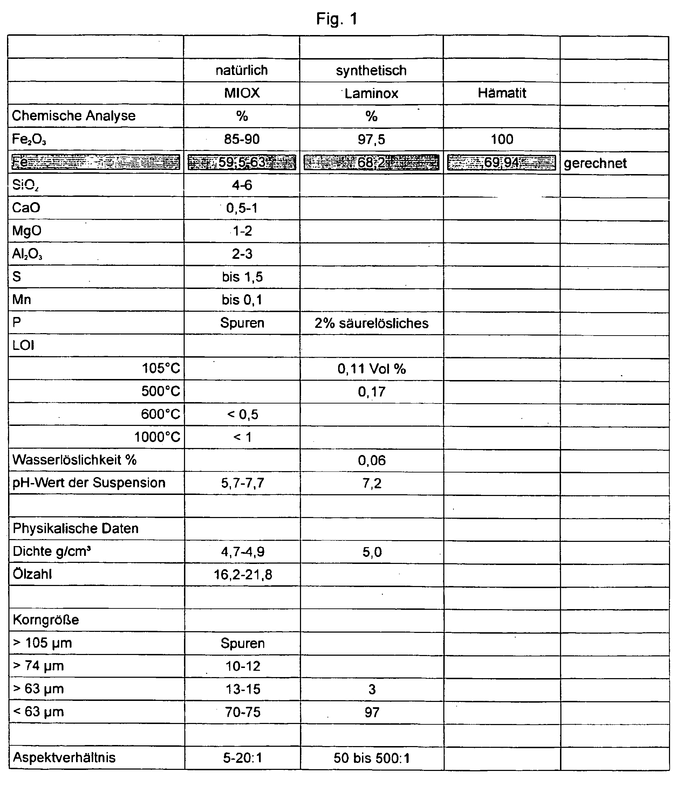

Im Einzelnen zeigt die Fig. 1 eine Tabelle, in welcher die Ergebnisse diverser Untersuchungen einer Probe natürlichen Eisen-III-Oxids und eine Probe synthetischen Eisen-III-Oxids gegenübergestellt sind. Die Untersuchungen umfassten chemische und physikalische Analysen; darunter auch sedimentologische Methode (Korngrößenanalyse). Anzumerken ist hierbei, dass es sich bei der untersuchten Probe des natürlichen Eisen-III-Oxids nicht um ein erfindungsgemäßes Eisen-III-Oxid handelt. Die Darstellung soll im Wesentlichen den Unterschied von natürlichem zu synthetischen Eisen-III-Oxid aufzeigen.

Aus den Ergebnissen der chemischen Analyse gemäß der Fig. 1 ist ersichtlich, dass die Daten zum natürlichen Eisen-III-Oxid neben Fe₂O₃ bzw. Fe auch Anteile anderer Stoffe oder Elemente zeigen. Das synthetische Eisen-III-Oxid weist einen Reinheitsgrad von bis zu 97 Gew.-% auf. Die Angaben zu den Korngrößen veranschaulicht, dass beim natürlichen Eisen-III-Oxid ein Kornband, d.h. Körner in verschiedener Partikelgröße vorliegt, während es sich beim synthetischen Eisen-III-Oxid vorwiegend um Monokörner handelt, d.h. im Wesentlichen eine Korngröße ist dominierend. Unterschiede zwischen den beiden Eisen-III-Oxid-Arten zeichnen sich auch beim Aspektverhältnis ab.

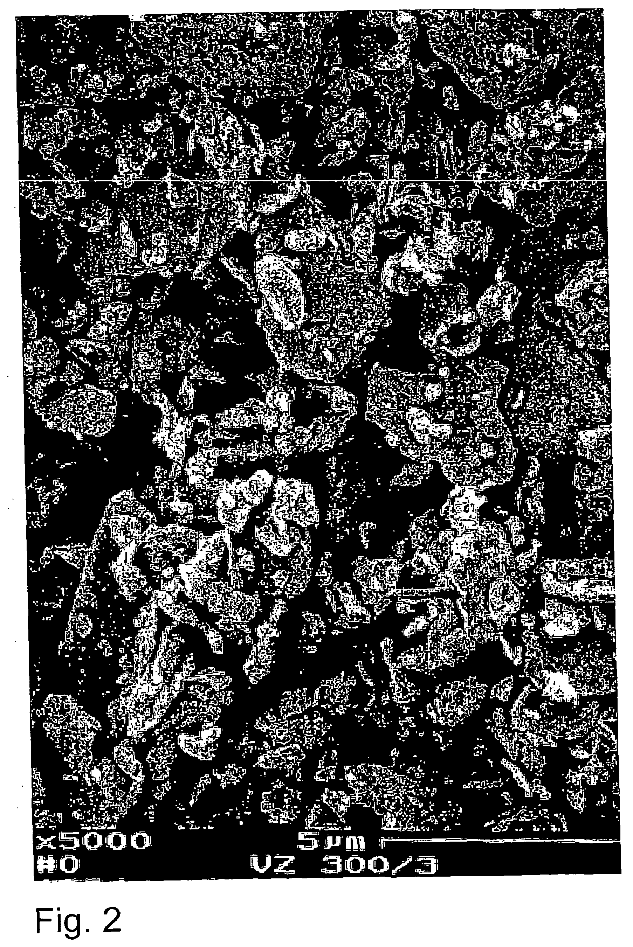

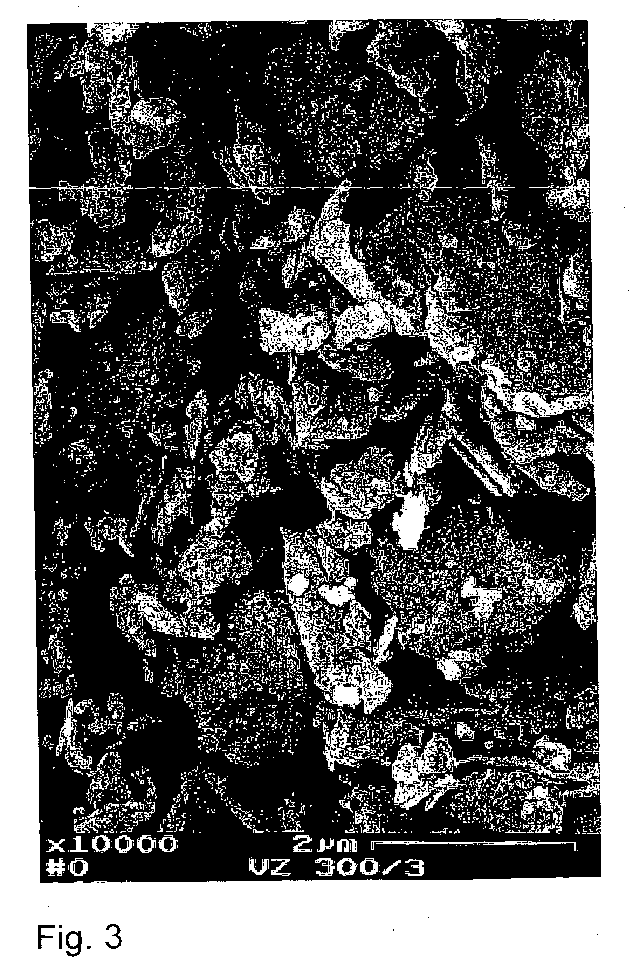

Fig. 2 zeigt ein Bild einer Elektronenmikroskopaufnahme mit 5000-facher Vergrößerung einer Probe des erfindungsgemäßen Eisen-III-Oxids. Gleichfalls ist in der Fig. 3 ein Bild einer Elektronenmikroskopaufnahme einer Probe des erfindungsgemäßen Eisen-III-Oxids zu sehen, wobei hier die Probe in 10000-facher Vergrößerung gezeigt ist. Anhand der Maßstabangabe in beiden Figuren ist verdeutlicht, dass die Körner unter der 10 µm-Grenze liegen. Darüber hinaus ist ersichtlich, dass die überwiegende Mehrheit, schätzungsweise 90 %, der Eisen-III-Oxid-Partikel eine ausgezeichnet erhaltene, unversehrte Plättchenform - trotz mechanischer Aufbereitung - aufweisen. Gleichfalls ist eine Verteilung der Partikelgrößen erkennbar.

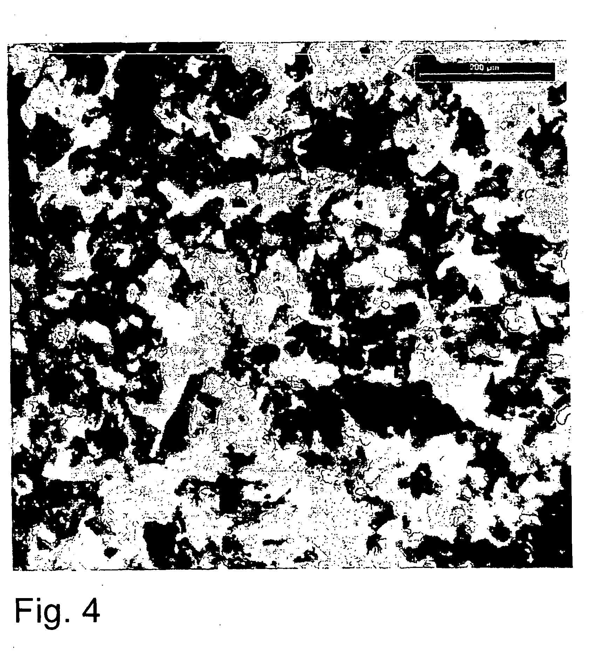

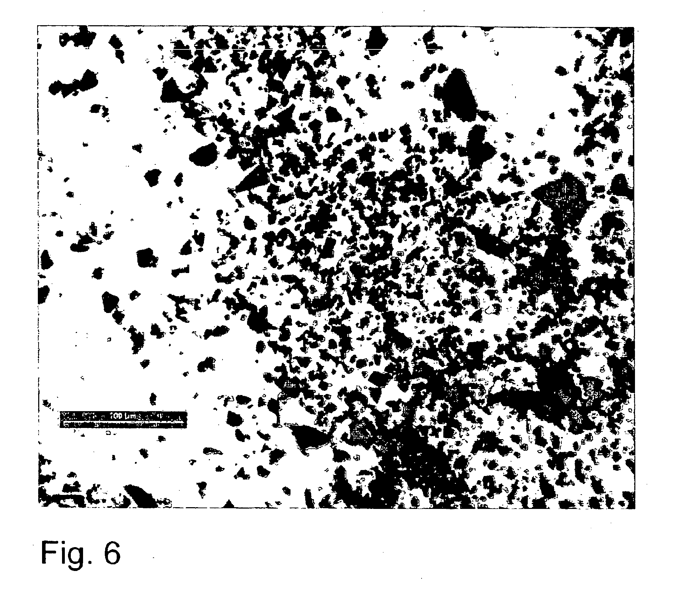

Die Kornverteilung, Größe der einzelnen Partikel, zum Teil die Schichtdicke, sowie Plättchenform der erfindungsgemäßen Eisen-III-Oxid-Körner ist des Weiteren anhand der Aufnahmen gemäß der Fig. 4 und Fig. 6 veranschaulicht, wobei bei diesen Bildern ein Maßstab von 200 µm angegeben ist. In der Fig. 4 sind die teilweise aufgrund der Genese von natürlichem Eisen-III-Oxid gebildeten Verwachsungen der Fe-Glimmer-Partikel mit anderen Mineralien sichtbar, wobei es sich hier größtenteils um Silikate handelt.

Mit Hilfe der erfindungsgemäßen Eisen-III-Oxide lamellarer Struktur können weitaus dünnere Filmschichten als bislang möglich erhalten werden, die dennoch die hohen spezifischen Anforderungen hinsichtlich Barriere-, Schildwirkung, Belastbarkeit, Dauerhaftigkeit sowie Kosten und Wirtschaftlichkeit erfüllen.

## Patentansprüche

1. Eisen-III-Oxid, das eine lamellare Struktur von mindestens 50 Gew.-%, vorzugsweise 75 Gew.-% aufweist, **dadurch gekennzeichnet, dass** das Eisen-III-Oxid ein mechanisch aufbereitetes Eisen-III-Oxid natürlichen Ursprungs ist und zumindest Gew. 50 %, vorzugsweise zumindest 70 Gew.-%, besonders bevorzugt 90 Gew.-%, des Eisen-III-Oxids in einer Partikelgröße von kleiner als 10 µm vorliegen.

2. Eisen-III-Oxid nach Anspruch 1, **dadurch gekennzeichnet, dass** das Eisen-III-Oxid in einer Partikelgröße von kleiner oder kleiner gleich 5 µm vorliegt.

3. Eisen-III-Oxid nach einem der Ansprüche 1 bis 2, **dadurch gekennzeichnet, dass** das Aspektverhältnis [Größtdurchmesser/Dicke] der Lamellen des Eisen-III-Oxids im Wesentlichen 20 : 1 bis 5 : 1, vorzugsweise 10 : 1, beträgt.

4. Eisen-III-Oxid nach Anspruch 3, **dadurch gekennzeichnet, dass** Eisen-III-Oxid synthetischen Ursprungs beigemengt ist.

5. Eisen-III-Oxid nach einem der Ansprüche 1 bis 3, **dadurch gekennzeichnet, dass** das synthetische, beigemengte Eisen-III-Oxid durch an sich bekannte Methoden, beispielsweise durch Kristallzüchtung, hergestellt ist.

6. Verfahren zur Herstellung von lamellaren Eisen-III-Oxid nach einem der Ansprüche 1 bis 5, **dadurch gekennzeichnet, dass** Eisen-III-Oxid in einer Prallmühle, wie mit Hilfe einer an sich bekannten Strahlmühle, mechanisch aufbereitet wird.

7. Verfahren nach Anspruch 6, **dadurch gekennzeichnet, dass** das Eisen-III-Oxid nach der mechanischen Aufbereitung in Partikel- bzw. Kornbänder getrennt, wie beispielsweise gesichtet, wird.

8. Verwendung von Eisen-III-Oxid nach einem der Ansprüche 1 bis 5 zur Herstellung von Überzügen, wie Lacke, zum Schutz von Untergründen gegen Korrosion.

9. Verwendung von Eisen-III-Oxid nach einem der Ansprüche 1 bis 5 zur Herstellung von Überzügen, wie Lacke, zum Schutz von Untergründen vor mechanischer Beanspruchung.

10. Verwendung von Eisen-III-Oxid nach einem der Ansprüche 1 bis 5 zur Herstellung von Überzügen, wie Lacke, als Lichtschutz von Untergründen.

11. Verwendung von Eisen-III-Oxid nach einem der Ansprüche 1 bis 5 zur Herstellung von Zierüberzügen für Gegenstände, wie für Boote, Surfbretter, Dekorgegenstände und dgl.

12. Verwendung von Eisen-III-Oxid nach einem der Ansprüche 1 bis 5 als Füllmaterial in Kunststoffprodukten, wie Polyethylen, Polypropylen, Polyamid, Glasfaser-verstärkte Kunststoffe und dgl.

13. Verwendung von Eisen-III-Oxid nach einem der Ansprüche 1 bis 5 als Zusatz in keramischen Werkstoffen.

## Claims

1. An iron(III) oxide having a lamellar structure of at least 50% by weight, preferably 75% by weight, **characterised in that** the iron(III) oxide is a mechanically processed iron(III) oxide of natural origin, and **in that** at least 50% by weight, preferably at least 70% by weight, particularly preferably 90% by weight, of the iron(III) oxide are provided in a particle size of smaller than 10 µm.

2. The iron(III) oxide according to claim 1, **characterised in that** the iron(III) oxide is provided in a particle size of smaller than or ≤ 5 µm.

3. The iron(III) oxide according to any one of claims 1 to 2, **characterised in that** the aspect ratio [largest diameter/thickness] of the lamellae of the iron(III) oxide is substantially 20:1 to 5:1, preferably 10:1.

4. The iron(III) oxide according to claim 3, **characterised in that** iron(III) oxide of synthetic origin is admixed.

5. The iron(III) oxide according to any one of claims 1 to 3, **characterised in that** the synthetic admixed iron(III) oxide is produced by *per se* conventional methods, e.g. by crystal growing.

6. A method for producing lamellar iron(III) oxide according to any one of claims 1 to 5, **characterised in that** the iron(III) oxide is mechanically processed in an impact crusher, such as by means of a jet mill known *per se*.

7. The method according to claim 6, **characterised in that** after the mechanical processing, the iron(III) oxide is separated, such as, e.g., sifted, into particle or grain bands, respectively.

8. The use of iron(III) oxide according to any one of claims 1 to 5 for producing coatings, such as varnishes, for protecting substructures against corrosion.

9. The use of iron(III) oxide according to any one of claims 1 to 5 for producing coatings, such as varnishes, for protecting substructures against mechanical wear.

10. The use of iron(III) oxide according to any one of claims 1 to 5 for producing coatings, such as varnishes, as a light shield for substructures.

11. The use of iron(III) oxide according to any one of claims 1 to 5 for producing decorative coatings for objects, such as boats, surfboards, decorative objects and the like.

12. The use of iron(III) oxide according to any one of claims 1 to 5 as a filler in synthetic material products, such as polyethylene, polypropylene, polyamide, fibre-glass reinforced synthetic materials and the like.

13. The use of iron(III) oxide according to any one of claims 1 to 5 as an additive in ceramics materials.

## Revendications

1. Oxyde de fer III, présentant une structure lamellaire d'au moins 50 % en poids, de préférence 75 % en poids, **caractérisé en ce que** l'oxyde de fer III est un oxyde de fer III d'origine naturelle préparé mécaniquement et **en ce qu'**au moins 50 % en poids, avantageusement au moins 70 % en poids, en particulier de préférence 90 % en poids de l'oxyde de fer III présente une taille de particules inférieure à 10 µm.

2. Oxyde de fer III selon la revendication 1, **caractérisé en ce que** l'oxyde de fer III présente une taille de particules inférieure à ou inférieure ou égale à 5 µm.

3. Oxyde de fer III selon l'une des revendications 1 et 2, **caractérisé en ce que** le rapport d'aspect [diamètre maximal / épaisseur] des lamelles de l'oxyde de fer III est essentiellement compris entre 20 : 1 et 5 : 1, de préférence égal à 10 : 1.

4. Oxyde de fer III selon la revendication 3, **caractérisé en ce que** de l'oxyde de fer III d'origine synthétique lui est mélangé.

5. Oxyde de fer III selon l'une des revendications 1 à 3, **caractérisé en ce que** l'oxyde de fer III synthétique ajouté est produit par des méthodes connues en elles-mêmes, par exemple par croissance cristalline.

6. Procédé de production d'oxyde de fer III lamellaire selon l'une des revendications 1 à 5, **caractérisé en ce que** l'oxyde de fer III est préparé mécaniquement dans un broyeur à percussion, notamment au moyen d'un broyeur à jet connu en soi.

7. Procédé selon la revendication 6, **caractérisé en ce que** l'oxyde de fer III est séparé en catégories de particules ou de grains après la préparation mécanique, par exemple trié.

8. Utilisation d'oxyde de fer III selon l'une des revendications 1 à 5 pour la fabrication de revêtements, tels que des vernis, pour la protection de substrats contre la corrosion.

9. Utilisation d'oxyde de fer III selon l'une des revendications 1 à 5 pour la fabrication de revêtements, tels que des vernis, pour la protection de substrats contre les sollicitations mécaniques.

10. Utilisation d'oxyde de fer III selon l'une des revendications 1 à 5 pour la fabrication de revêtements, tels que des vernis, pour la protection de substrats contre la lumière.

11. Utilisation d'oxyde de fer III selon l'une des revendications 1 à 5 pour la fabrication de revêtements décoratifs pour des objets tels que des bateaux, des planches de surf, des objets décoratifs et analogues.

12. Utilisation d'oxyde de fer III selon l'une des revendications 1 à 5 en tant que matériau de charge dans des produits en matières plastiques, telles que le polyéthylène, le polypropylène, le polyamide, des matières plastiques renforcées avec des fibres de verre et analogues.

13. Utilisation d'oxyde de fer III selon l'une des revendications 1 à 5 en tant qu'additif dans des matériaux céramiques.
